(19) Europäisches Patentamt
European Patent Office
Office européen des brevets

(11) **EP 4 001 388 A1**

(12) **EUROPEAN PATENT APPLICATION**

(43) Date of publication:
**25.05.2022  Bulletin 2022/21**

(21) Application number: **20208157.6**

(22) Date of filing: **17.11.2020**

(51) International Patent Classification (IPC):
**C11D 3/37** (2006.01)          **C11D 17/04** (2006.01)
**C11D 11/00** (2006.01)

(52) Cooperative Patent Classification (CPC):
**C11D 3/3796; C11D 3/3788; C11D 11/0023;
C11D 17/045**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **The Procter & Gamble Company
Cincinnati, OH 45202 (US)**

(72) Inventors:
• **DELPLANCKE, Patrick Firmin August
1853 Strombeek-Bever (BE)**
• **VAN ELSEN, Katrien Andrea Lieven
1853 Strombeek-Bever (BE)**

(74) Representative: **P&G Patent Belgium UK
N.V. Procter & Gamble Services Company S.A.
Temselaan 100
1853 Strombeek-Bever (BE)**

(54) **AUTOMATIC DISHWASHING METHOD WITH AMPHIPHILIC GRAFT POLYMER IN THE RINSE**

(57)  A method of cleaning dishware in a domestic dishwasher using a program having a cleaning cycle and a rinse cycle, the method comprising the steps of placing the dishware in the dishwasher; delivering a cleaning composition into the cleaning cycle to form a wash liquor and subjecting the dishware to the wash liquor; and delivering a rinse composition to form a rinse liquor, the composition comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000 and subjecting the dishware to the rinse liquor.

**EP 4 001 388 A1**

**Description**

FIELD OF THE INVENTION

The present invention is in the field of automatic dishwashing. In particular, it relates to a method to provide improved cleaning, more in particular to provide grit prevention.

BACKGROUND OF THE INVENTION

A frequent problem found in automatic dishwashing is the presence of grit on washed items. Grit is sometimes found on dishware/tableware after the automatic dishwashing process even if the items were free of it before they went into the dishwasher. It seems that grit is formed during the dishwashing process. The mechanism of grit formation is not well understood. It might be due to the high temperatures and combination of different soils, including oily soils, lifted from the soiled items during the dishwashing process. Somehow, different soils seem to recombine to give rise to grit which are small particles that deposit onto the surface of the washed items. Once the grit is formed and deposited it is very difficult to remove it.

Another problem encounter during automatic dishwashing is the staining of the interior of the dishwasher, including the racks and the filter.

It is an objective of the invention to provide a dishwashing process that leave items free of grit even when the load is heavily soiled with a high content of grease. It is another objective of the present invention to prevent the staining of the interior of the dishwasher, more in particular to prevent the staining of the filter.

SUMMARY OF THE INVENTION

According to the first aspect of the invention, there is provided a method of cleaning dishware in a domestic dishwasher. The method uses a dishwashing program comprising a cleaning cycle and a rinse cycle. The method comprises the following steps:

a) placing the dishware in the dishwasher;
b) delivering a cleaning composition into the cleaning cycle to form a wash liquor and subjecting the dishware to the wash liquor; and
c) delivering a rinse composition to form a rinse liquor and subjecting the dishware to the rinse liquor, the rinse composition comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000.

The method of the invention prevents grit formation even when the dishwasher load contains a high amount of greasy soils. The method also prevents the staining of the interior parts of the dishwasher, including the staining of the filter.

According to the second aspect of the invention, there is provided a rinse composition, the composition is suitable for use in the method of the invention. According to the third aspect of the invention, there is provided an automatic dishwashing pack suitable for use in the method of the invention. According to a further aspect of the invention, there is provided the use of the method of the invention to provide grit prevention.

The elements of the first aspect of the invention apply *mutatis mutandis* to the subsequent aspects of the invention.

DETAILED DESCRIPTION OF THE INVENTION

The present invention encompasses a method of washing dishware in a dishwasher, a composition suitable for use in the method of the invention, a pack to accommodate a cleaning and a rinse composition for use in the method of the invention, the use of the composition to provide grit prevention. The method of the invention also provides prevention of staining of the interior parts of the dishwasher, especially it prevents the staining of the plastic parts of the dishwasher, including racks, cutlery basket and filter. The method of the invention takes place in a domestic dishwasher.

Automatic dishwashing machines may be domestic or commercial/institutional machine types. Generally, the differences are in terms of size, volume of throughput and duration of the dishwashing process. This can mean the machines are designed in very different ways. Industrial/ institutional machines often have much shorter but more energy intensive (e.g. higher temperature) cycles compared to domestic machines, and/or use much more aggressive chemistry. Typically, they will not use enzymes, because these need a certain contact time with the treated soils to perform effectively, and the commercial cycle time is too short. In the case of commercial dishwashers, the machines can be based on a conveyor system in which dishware is moved through a single or multiple tanks of the dishwasher, whereas in domestic machines the dishware will generally always remain stationary in one tank inside the dishwasher, and all the washing steps will occur in that single tank. In domestic dishwashing, it is conventional to include bleaches and enzymes in the detergent.

"Dishware" herein means cookware, dishware and tableware, i.e all items related to cooking and serving food and drinks that are usually washed in a dishwasher.

As used herein, the articles including "a" and "an" are understood to mean one or more of what is claimed or described. Unless otherwise noted, all component or composition levels are in reference to the active portion of that component or composition, and are exclusive of impurities, for example, residual solvents or by-products, which may be present in commercially available sources of such components or compositions. Unless specifically stated or the context otherwise requires, embodiments described herein apply equally to all aspects of the invention. Percentages quoted are by weight, unless otherwise stated or the context otherwise requires.

All measurements are performed at 25°C unless otherwise specified.

METHODE OF INVENTION

The method of the invention comprises the following steps to be performed in a domestic dishwasher:

a) placing the dishware in the dishwasher;
b) delivering a cleaning composition into the cleaning cycle to form a wash liquor and subjecting the dishware to the resulting wash liquor; and
c) delivering a rinse composition to form a rinse liquor and subjecting the dishware to the rinse liquor, the rinse composition comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000.

The cleaning cycle takes place before the rinse cycle. The wash liquor can be discharged before introducing fresh water to form the rinse liquor. Alternatively, the rinse liquor can be formed by adding the rinse composition to the wash liquor.

The method of the invention can optionally have an intermediate rinse between steps b) and c) and/or a final rinse after step c). The liquor of the intermediate rinse can be discharged or left for the subsequent rinse.

The cleaning composition preferably comprises a builder, a complexing agent, non-ionic surfactant, a dispersing polymer, enzymes and optionally but preferably bleach. Preferably the cleaning composition is alkaline.

Usually rinse aids in automatic dishwashing are used for finishing and not for cleaning of the dishware. Usually, rinse aids are used to promote sheeting of the rinse liquor to leave the cleaned dishware free of filming and spotting and shiny. In the present application it has been surprisingly found that a method comprising the step of treating the dishware with a cleaning composition in the main wash followed by a rinse composition comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000, provides improved cleaning, especially when the dishwasher load contains a high amount of greasy soils, versus methods that use a conventional rinse aid. The method of the present invention provides grit prevention and can also prevent the staining of the interior parts, especially the plastic parts of the dishwasher. Without being bound by theory, it is believed that the amphiphilic graft polymer helps with grease suspension, thereby avoiding the formation of grit. Shine can be improved when the rinse composition comprises a complexing agent, more in particular when the complexing agent comprises a salt of methyl glycine diacetic acid. Preferably the rinse composition comprises a non-ionic surfactant. Preferably the rinse composition comprises a hydrocarboxylic acid, more preferably citric acid. Preferably the rinse composition comprises a crystal growth inhibitor, more preferably HEDP. The rinse aid composition is free of anionic cleaning surfactants. Preferably, the rinse aid composition is also free of amphoteric surfactants.

In the context of the present application, "a dishwashing program" is a completed cleaning process that includes a cleaning cycle and a rinse cycle and optionally, pre-wash, pre-rinse and/or post-rinse cycles, and which can be selected and actuated by means of the program switch of the dishwasher. The duration of these separate dishwashing programs is advantageously at least 15 minutes, advantageously from 20 to 360 minutes, preferably from 20 to 90 minutes. Within the meaning of this application, a "short cleaning program" lasts less than 60 minutes and a "long cleaning program" lasts 60 minutes or more.

A domestic dishwasher can usually provide a plurality of programs, such as a basic wash program, for washing normally dirty dishware dried up to a certain extent; an intensive wash program, for washing very dirty dishware; or in case of food rests particularly difficult to remove (very dry or burnt spots) an economy wash program. Each program comprises a plurality of sequential steps. Usually, one or two cold prewash cycles, a cleaning cycle (also known as main wash), a cold rinse cycle, a hot rinse cycle and optionally a drying cycle. During the different cycles of a program, different compositions can be added to the water in the dishwasher to help the cleaning.

During the course of a selected dishwashing program a domestic dishwasher generally performs more than one cycle, such as a pre-wash, cleaning cycle, intermediate rinse cycle, rinse cycle and then a drying cycle to terminate the program. During the respective cycles, wash liquor is distributed, in particular sprayed, by means of a rotating spray arm, a fixed spray nozzle, for example a top spray head, a movable spray nozzle, for example a top spinning unit, and/or some other liquid distribution apparatus, in the treatment chamber of the dishwasher cavity, in which wash liquor is applied to items to be washed, such as dishes and/or cutlery, which are supported in and/or on at least one loading unit, for example a pull-out rack or a cutlery drawer that can preferably be removed or pulled out. To this end the dishwasher is preferably supplied with wash liquor by way of at least one supply line by an operating circulating pump, said wash liquor collecting at the bottom of the dishwasher cavity, preferably in a depression, in particular in a sump. If the cleaning and/or the rinse liquors must be heated during the respective cycle, the wash and/or rinse liquor are heated by means of a heating facility. This can be part of the circulating pump. At the end of the respective cycle some or all of the liquor present in the treatment chamber of the dishwasher cavity in each instance might be pumped out by means of a drain pump.

Cleaning composition

The cleaning composition is delivered to the wash water of the cleaning cycle to form the wash liquor. The cleaning composition preferably comprises enzymes, more preferably proteases and amylases. The wash liquor is preferably alkaline, more preferably the wash liquor has a pH above 9, preferably above 10. Preferably, the cleaning composition is free of phosphate. By "free of phosphate" is herein meant that the composition comprises less than 0.1% by weight of the composition of phosphate.

The cleaning composition preferably comprises enzymes and optionally but preferably a complexing agent, a polymer, inorganic builder (preferably carbonate and/or silicate), non-ionic surfactant, etc. The composition may comprise bleach, bleach catalyst and/or bleach activators. In some embodiments the cleaning composition may be free of bleach, bleach catalyst and bleach activator and preferably free of anionic cleaning surfactant.

Enzymes

The cleaning composition preferably comprises enzymes, preferably amylases and proteases. In describing enzyme variants herein, the following nomenclature is used for ease of reference: Original amino acid(s):position(s):substituted amino acid(s). Standard enzyme IUPAC 1-letter codes for amino acids are used.

Proteases

The cleaning composition preferably comprises a protease. A mixture of two or more proteases can also contribute to an enhanced cleaning across a broader temperature, cycle duration, and/or substrate range, and provide superior shine benefits, especially when used in conjunction with an anti-redeposition agent and/or a sulfonated polymer.

Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:

(a) subtilisins (EC 3.4.21.62), especially those derived from Bacillus, such as *Bacillus sp., B. lentus, B. alkalophilus, B. subtilis, B. amyloliquefaciens, B. pumilus , B. gibsonii, and B. akibaii* described in WO2004067737, WO2015091989, WO2015091990, WO2015024739, WO2015143360, US 6,312,936, US 5,679,630, US 4,760,025, DE102006022216A1, DE 102006022224A1 , WO2015089447, WO2015089441, WO2016066756, WO2016066757, WO2016069557, WO2016069563, WO2016069569.

(b) trypsin-type or chymotrypsin-type proteases, such as trypsin (e.g., of porcine or bovine origin), including the Fusarium protease described in WO 89/06270 and the chymotrypsin proteases derived from Cellumonas described in WO 05/052161 and WO 05/052146.

(c) metalloproteases, especially those derived from *Bacillus amyloliquefaciens* described in WO07/044993A2; from *Bacillus, Brevibacillus, Thermoactinomyces, Geobacillus, Paenibacillus, Lysinibacillus* or *Streptomyces spp.* described in WO2014194032, WO2014194054 and WO2014194117; from *Kribella alluminosa* described in WO2015193488; and from Streptomyces and *Lysobacter* described in WO2016075078.

(d) protease having at least 90% identity to the subtilase from Bacillus sp. TY 145, NCIMB 40339, described in WO92/17577 (Novozymes A/S), including the variants of this Bacillus sp TY145 subtilase described in WO2015024739, and WO2016066757.

(e) protease having at least 90%, preferably at least 92% identity with the amino acid sequence of SEQ ID NO:85 from WO2016/205755 comprising at least one amino acid substitution (using the SEQ ID NO:85 numbering) selected from the group consisting of 1, 4, 9, 21, 24, 27, 36, 37, 39, 42, 43, 44, 47, 54, 55, 56, 74, 80, 85, 87, 99, 102, 114, 117, 119, 121, 126, 127, 128, 131, 143, 144, 158, 159, 160, 169, 182, 188, 190, 197, 198, 212, 224, 231, 232, 237, 242, 245, 246, 254, 255, 256, and 257, including the variants found in WO2016/205755 and WO2018/118950.

(f) protease having at least 90%, preferably at least 92%, more preferably at least 98% identity with the amino acid sequence of SEQ ID NO:1 from US 10,655,090 B2. A preferred protease has 100% identity with SEQ ID NO:1 from US 10,655,090 B2. Another preferred protease has 1 to 4 modifications with respect to SEQ ID NO:1 from US 10,655,090 B2.

Especially preferred proteases for the detergent of the invention are:

(a) polypeptides demonstrating at least 90%, preferably at least 95%, more preferably at least 98%, even more preferably at least 99% and especially 100% identity with the wild-type enzyme from *Bacillus lentus,* comprising mutations in one or more, preferably two or more and more preferably three or more of the following positions, using the BPN' numbering system and amino acid abbreviations as illustrated in WO00/37627, which is incorporated herein by reference:V68A, N76D, N87S, S99D, S99AD, S99A, S101G, S101M, S103A, V104N/I, G118V, G118R, S128L, P129Q, S130A, Y167A, R170S, A194P, V205I, Q206L/D/E, Y209W and/or M222S. and/or

(b) protease having at least 95%, more preferably at least 98%, even more preferably at least 99% and especially 100% identity with the amino acid sequence of SEQ ID NO:85 from WO2016/205755 comprising at least one amino acid substitution (using the SEQ ID NO:85 numbering) selected from the group comprising: P54E/G/I/L/Q/S/T/V; S99A/E/H/I/K/M/N/Q/R/T/V;S126A/D/E/F/G/H/I/L/M/N/Q/R/T/V/Y;    D127A/E/F/G/H/I/L/M/N/P/Q/S/T/V/W/Y; F128A/C/D/E/G/H/I/K/L/M/N/P/Q/R/S/T/W, A37T, S39E, A47V, T56Y, I80V, N85S, E87D, T114Q, and N242D;

Most preferably the additional protease is either selected from the group of proteases comprising the below mutations (BPN' numbering system) versus either the PB92 wild-type (SEQ ID NO:2 in WO 08/010925) or the subtilisin 309 wild-type (sequence as per PB92 backbone, except comprising a natural variation of N87S).

(i) G118V + S128L + P129Q + S130A
(ii) S101M + G118V + S128L + P129Q + S130A
(iii) N76D + N87R + G118R + S128L + P129Q + S130A + S188D + N248R
(iv) N76D + N87R + G118R + S128L + P129Q + S130A + S188D + V244R
(v) N76D + N87R + G118R + S128L + P129Q + S130A
(vi) V68A + N87S + S101G + V104N
(vii) S99AD

or selected from the group of proteases comprising one or more, preferably two or more, preferably three or more, preferably four or more of the below mutations versus SEQ ID NO:1 from WO2018/118950: P54T, S99M, S126A/G, D127E, F128C/D/E/G, A37T, S39E, A47V, T56Y, I80V, N85S, E87D, T114Q, and N242D.

Most preferred for use herein are proteases wherein the protease is a variant having at least 60% identity with the amino acid sequence of SEQ ID NO:1 of WO2019/125894 A1 and comprising at least one amino acid substitution (using the SEQ ID NO: 1 numbering) selected from the group consisting of: X54T; X126A, D, G, V, E, K, I; X127E, S, T, A, P, G, C; and X128E, C, T, D, P, G, L, Y, N and X211L. Preferably, a variant having at least 90% identity with the amino acid sequence of SEQ ID NO:1 and said variant comprising at least one amino acid substitution (using the SEQ ID NO:1 numbering) selected from the group consisting of P54T, S126A, D127E, F128G and M211L

Other preferred protease for use herein include a protease wherein the protease is a variant having at least 90% identity with the amino acid sequence of SEQ ID NO:1 of WO2019/245839 A1 and the variant comprises one or more amino acid substitutions at one or more positions corresponding to SEQ ID NO: 1 positions selected from: 1C/D/E/M/N, 21L, 37A, 54A, 73V, 76D/H/N/T, 83G, 84D/E/F, 85I/M, 86I/S/T/V, 87T, 88M/V, 89F/W, 911, 95A/N/S, 96M/Q, 97E, 98M, 99A/F/H/I/K/L/Q/T/W/Y, 102L, 104E, 105L, 106I/V, 108A, 1091, 112C, 114M/N, 115A/E/H/Q, 116A/E/G/H/Q, 118A/D/N, 122C, 124E/Q, 126I/Q/V, 128H/I/L/M/N/Q/S/T/V/Y, 129D/H, 130N, 131D/E/N/P/Q, 135A/D/H/K/L/M/N/Q/T/V/W/Y, 138D/E, 139E/L, 141A/E/F/H/Y, 142A/D/E, 143E/H/K/M/S/V, 156E, and 157C/D/E wherein the amino acid positions of the variant are numbered by correspondence with the amino acid sequence of SEQ ID NO: 1.

Suitable commercially available additional protease enzymes include those sold under the trade names Alcalase®, Savinase®, Primase®, Durazym®, Polarzyme®, Kannase®, Liquanase®, Liquanase Ultra®, Savinase Ultra®, Savinase Evity®, Ovozyme®, Neutrase®, Everlase®, Coronase®, Blaze®, Blaze Ultra®, Blaze Evity® and Esperase® by Novozymes A/S (Denmark); those sold under the tradename Maxatase®, Maxacal®, Maxapem®, Properase®, Purafect®, Purafect Prime®, Purafect Ox®, FN3®, FN4®, Excellase®, Ultimase®, Extremase® and Purafect OXP® by Dupont; those sold under the tradename Opticlean® and Optimase® by Solvay Enzymes; and those available from Henkel/Kemira, namely BLAP (sequence shown in Figure29 of US 5,352,604 with the following mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D); and KAP (Bacillus alkalophilus subtilisin with mutations A230V + S256G + S259N) from Kao.

Especially preferred for use herein are commercial proteases selected from the group consisting of Properase®, Blaze®, Blaze Evity®, Savinase Evity®, Extremase®, Ultimase®, Everlase®, Savinase®, Excellase®, Blaze Ultra®, BLAP and BLAP variants.

Preferred levels of protease in the composition of the invention include from about 0.05 to about 20, more preferably from about 0.5 to about 15 and especially from about 2 to about 12 mg of active protease/g of composition.

Amylases

Preferably the cleaning composition may comprise an amylase. Suitable alpha- amylases include those of bacterial or fungal origin. Chemically or genetically modified mutants (variants) are included. A preferred alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCBI 12289, NCBI 12512, NCBI 12513, DSM 9375 (USP 7,153,818) DSM 12368, DSMZ no. 12649, KSM AP1378 (WO 97/00324), KSM K36 or KSM K38 (EP 1,022,334). Preferred amylases include:

(a) variants described in WO 96/23873, WO00/60060, WO06/002643 and WO2017/192657, especially the variants with one or more substitutions in the following positions versus SEQ ID NO. 12 of WO06/002643: 26, 30, 33, 82, 37, 106, 118, 128, 133, 149, 150, 160, 178, 182, 186, 193, 202, 214, 231, 246, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D 183* and G184*.
(b) variants exhibiting at least 90% identity with SEQ ID No. 4 in WO06/002643, the wild-type enzyme from Bacillus SP722, especially variants with deletions in the 183 and 184 positions and variants described in WO 00/60060, WO2011/100410 and WO2013/003659 which are incorporated herein by reference.
(c) variants exhibiting at least 95% identity with the wild-type enzyme from Bacillus sp.707 (SEQ ID NO:7 in US 6,093, 562), especially those comprising one or more of mutations in the following positions M202, M208, S255, R172, and/or M261. Preferably said amylase comprises one or more of M202L, M202V, M202S, M202T, M202I, M202Q, M202W, S255N and/or R172Q. Particularly preferred are those comprising the M202L or M202T mutations.
(d) variants described in WO 09/149130, preferably those exhibiting at least 90% identity with SEQ ID NO: 1 or SEQ ID NO:2 in WO 09/149130, the wild-type enzyme from Geobacillus Stearophermophilus or a truncated version thereof.
(e) variants exhibiting at least 89% identity with SEQ ID NO:1 in WO2016091688, especially those comprising deletions at positions H183+G184 and additionally one or more mutations at positions 405, 421, 422 and/or 428.
(f) variants exhibiting at least 60% amino acid sequence identity with the "PcuAmyl a-amylase" from Paenibacillus curdlanolyticus YK9 (SEQ ID NO:3 in WO2014099523).
(g) variants exhibiting at least 60% amino acid sequence identity with the"CspAmy2 amylase" from Cytophaga sp. (SEQ ID NO:1 in WO2014164777).
(h) variants exhibiting at least 85% identity with AmyE from Bacillus subtilis (SEQ ID NO:1 in WO2009149271).
(i) variants exhibiting at least 90% identity with the wild-type amylase from Bacillus sp. KSM- K38 with accession number AB051102.
(j) variants exhibiting at least 80% identity with the mature amino acid sequence of AAI10 from Bacillus sp (SEQ ID NO:7 in WO2016180748), preferably comprising a mutation in one or more of the following positions modification in one or more positions 1, 54, 56, 72, 109, 113, 116, 134, 140, 159, 167, 169, 172, 173, 174, 181, 182, 183, 184, 189, 194, 195, 206, 255, 260, 262, 265, 284, 289, 304, 305, 347, 391, 395, 439, 469, 444, 473, 476, or 477
(k) variants exhibiting at least 80% identity with the mature amino acid sequence of the fusion peptide (SEQ ID NO:14 in US 2019/0169546), preferably comprising one or more of the mutations H1*, N54S + V56T, A60V, G109A, R116Q/H + W167F, L173V, A174S, Q172N, G182*, D183*, N195F, V206L/Y, V208L, K391A, K393A, I405L, A421H, A422P, A428T, G476K and/or G478K. Preferred amylases contain both the deletions G182* and G183* and optionally one or more of the following sets of mutations:

1. H1* + G109A+ N195F + V206Y + K391A;
2. H1* + N54S + V56T + G109A + A1745 + N195F + V206L + K391A + G476K)
3. H1* + N54S + V56T + A60V + G109A + R116Q + W167F + Q172N + L173V + A1745 + N195F + V206L + I405L + A421H + A422P + A428T
4. H1* + N545 + V56T + G109A + R116Q + A1745 + N195F + V206L + I405L + A421H + A422P + A428T;
5. H1* + N545 + V56T + G109A + R116H + A1745 + N195F + V208L + K393A + G478K;

(1) variants exhibiting at least 80% identity with the mature amino acid sequence of Alicyclobacillus sp. amylase (SEQ ID NO:8 in WO2016180748).

The amylase can be an engineered enzyme, wherein one or more of the amino acids prone to bleach oxidation have been substituted by an amino acid less prone to oxidation. In particular it is preferred that methionine residues are substituted with any other amino acid. In particular it is preferred that the methionine most prone to oxidation is substituted. Preferably the methionine in a position equivalent to 202 in SEQ ID NO:2 is substituted. Preferably, the methionine at this position is substituted with threonine or leucine, preferably leucine.

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL®, ATLANTIC®, INTENSA® and BAN® (Novozymes A/S, Bagsvaerd, Denmark), KEMZYM® AT 9000 Biozym Biotech Trading GmbH Wehlistrasse 27b A- 1200 Wien Austria, RAPIDASE®, PURASTAR®, ENZYSIZE®, OPTISIZE HT PLUS®, POWERASE®, PREFERENZ S® series (including PREFERENZ S1000® and PREFERENZ S2000® and PURASTAR OXAM® (DuPont., Palo Alto, California) and KAM® (Kao, 14-10 Nihonbashi Kayabacho, 1-chome, Chuo-ku Tokyo 103-8210, Japan). In one aspect, suitable amylases include ATLANTIC®, STAINZYME®, POWERASE®, INTENSA® and STAINZYME PLUS®, ACHIEVE ALPHA® and mixtures thereof.

Preferably, the composition of the invention comprises at least 0.01 mg, preferably from about 0.05 to about 10, more preferably from about 0.1 to about 6, especially from about 0.2 to about 5 mg of active amylase/ g of composition.

Preferably, the protease and/or amylase of the composition of the invention are in the form of granulates, the granulates comprise more than 29% of sodium sulfate by weight of the granulate and/or the sodium sulfate and the active enzyme (protease and/or amylase) are in a weight ratio of between 3:1 and 100: 1 or preferably between 4:1 and 30: 1 or more preferably between 5:1 and 20:1.

Complexing agent

Complexing agents are materials capable of sequestering hardness ions, particularly calcium and/or magnesium. The cleaning composition can comprise a high level of complexing agent, however the level should not be too high otherwise enzymes can be negatively affected. Too high level of complexing agent can also negatively impact on glass care. Complexing agents provide improved shine. Preferably, both, the cleaning composition and the rinse composition comprise complexing agents, especially a salt of methyl glycine diacetic acid.

The cleaning composition may comprise from 15% to 50%, preferably from 20% to 40%, more preferably from 20% to 35% by weight of the composition of a complexing agent selected from the group consisting of methylglycine-N,N-diacetic acid (MGDA), glutamic acid-N,N-diacetic acid (GLDA), iminodisuccinic acid (IDS), citric acid, aspartic acid -N,N-diacetic acid (ASDA) its salts and mixtures thereof. Especially preferred complexing agent for use herein is a salt of MGDA, in particular the trisodium salt of MGDA. Mixture of citrate and the trisodium salt of MGDA are also preferred for use herein. Preferably, the composition of the invention comprises from 15% to 40% by weight of the composition of the trisodium salt of MGDA.

Inorganic builder

The cleaning composition preferably comprises an inorganic builder. Suitable inorganic builders are selected from the group consisting of carbonate, silicate and mixtures thereof. Especially preferred for use herein are sodium carbonate and silicate. Preferably, the cleaning composition comprises from 5 to 50%, more preferably from 10 to 40% and especially from 15 to 30% of sodium carbonate by weight of the composition.

Polymer

The polymer, if present, is used in any suitable amount from about 0.1% to about 30%, preferably from 0.5% to about 15%, more preferably from 1% to 10% by weight of the cleaning composition. Sulfonated/carboxylated polymers are particularly suitable for the cleaning composition.

Suitable sulfonated/carboxylated polymers described herein may have a weight average molecular weight of less than or equal to about 100,000 Da, or less than or equal to about 75,000 Da, or less than or equal to about 50,000 Da, or from about 3,000 Da to about 50,000, preferably from about 5,000 Da to about 45,000 Da.

Preferred sulfonated monomers include one or more of the following: 1-aerylamido-1-propanesulfonic acid, 2-acrylamido-2-propanesulfonic acid, 2-acrylamido-2-methyl-1-propanesulfonic acid, 2-methacrylamido-2-methyl-1-propanesulfonic acid, 3- methacrylamido-2-hydroxy-propanesulfonic acid, allylsulfonic acid, methallylsulfonic acid, allyloxybenzenesulfonic acid, methallyloxybenzenesulfonic acid, 2-hydroxy-3- (2-propenyloxy) propanesulfonic acid, 2-methyl-2-propen-1-sulfonic acid, styrenesulfonic acid, vinylsulfonic acid, 3-sulfopropyl, 3-sulfo-propylmethacrylate, sulfomethacrylamide, sulfomethylmethacrylamide and mixtures of said acids or their water-soluble salts.

Preferably, the polymer comprises the following levels of monomers: from about 40 to about 90%, preferably from about 60 to about 90% by weight of the polymer of one or more carboxylic acid monomer; from about 5 to about 50%, preferably from about 10 to about 40% by weight of the polymer of one or more sulfonic acid monomer; and optionally from about 1% to about 30%, preferably from about 2 to about 20% by weight of the polymer of one or more non-ionic monomer. An especially preferred polymer comprises about 70% to about 80% by weight of the polymer of at least one carboxylic acid monomer and from about 20% to about 30% by weight of the polymer of at least one sulfonic acid monomer.

In the polymers, all or some of the carboxylic or sulfonic acid groups can be present in neutralized form, i.e. the acidic hydrogen atom of the carboxylic and/or sulfonic acid group in some or all acid groups can be replaced with metal ions, preferably alkali metal ions and in particular with sodium ions.

The carboxylic acid is preferably (meth)acrylic acid. The sulfonic acid monomer is preferably 2-acrylamido-2-propanesulfonic acid (AMPS).

Preferred commercially available polymers include: Alcosperse 240 and Aquatreat AR 540 supplied by Nouryon; Acumer 3100, Acumer 2000, Acusol 587G and Acusol 588G supplied by Dow. Particularly preferred polymers are Acusol 587G and Acusol 588G supplied by Dow.

Suitable polymers include anionic carboxylic polymer of low molecular weight. They can be homopolymers or copolymers with a weight average molecular weight of less than or equal to about 200,000 g/mol, or less than or equal to about 75,000 g/mol, or less than or equal to about 50,000 g/mol, or from about 3,000 to about 50,000 g/mol, preferably from about 5,000 to about 45,000 g/mol. The dispersant polymer may be a low molecular weight homopolymer of polyacrylate, with an average molecular weight of from 1,000 to 20,000, particularly from 2,000 to 10,000, and particularly preferably from 3,000 to 5,000.

The polymer may be a copolymer of acrylic with methacrylic acid, acrylic and/or methacrylic with maleic acid, and acrylic and/or methacrylic with fumaric acid, with a molecular weight of less than 70,000. Their molecular weight ranges from 2,000 to 80,000 and more preferably from 20,000 to 50,000 and in particular 30,000 to 40,000 g/mol. and a ratio of (meth)acrylate to maleate or fumarate segments of from 30:1 to 1:2.

The polymer may be a copolymer of acrylamide and acrylate having a molecular weight of from 3,000 to 100,000, alternatively from 4,000 to 20,000, and an acrylamide content of less than 50%, alternatively less than 20%, by weight of the dispersant polymer can also be used. Alternatively, such polymer may have a molecular weight of from 4,000 to 20,000 and an acrylamide content of from 0% to 15%, by weight of the polymer.

Polymers suitable herein also include itaconic acid homopolymers and copolymers. Alternatively, the polymer can be selected from the group consisting of alkoxylated polyalkyleneimines, alkoxylated polycarboxylates, polyethylene glycols, styrene co-polymers, cellulose sulfate esters, carboxylated polysaccharides, amphiphilic graft copolymers and mixtures thereof.

Nonionic surfactant

Surfactants suitable for use herein include non-ionic surfactants, preferably the compositions are free of any other surfactants, more preferably the compositions are free of anionic cleaning surfactants. Anionic cleaning surfactants typically have an alkyl chain length of more than 10 carbon atoms. Anionic cleaning surfactants include alkyl sulfates, alkyl/aryl sulfonates and alkyl ethoxysulfates. Traditionally, non-ionic surfactants have been used in automatic dishwashing for surface modification purposes in particular for sheeting to avoid filming and spotting and to improve shine. It has been found that non-ionic surfactants can also contribute to prevent redeposition of soils.

Preferably the cleaning composition comprises a non-ionic surfactant or a non-ionic surfactant system, more preferably the non-ionic surfactant or a non-ionic surfactant system has a cloud point, as measured at a concentration of 1% in distilled water, between 20 and 70°C, preferably between 35 and 65°C. By a "non-ionic surfactant system" is meant herein a mixture of two or more non-ionic surfactants. Preferred for use herein are non-ionic surfactant systems. They seem to have improved cleaning and finishing properties and better stability in product than single non-ionic surfactants.

The cloud point is the temperature at which a non-ionic surfactant solution phase separates into a water rich and surfactant rich phase and becomes cloudy. The cloud point temperature can be determined visually by identifying at which temperature cloudiness occurs.

The cloud point temperature of a non-ionic surfactant can be determined as follows: a solution containing 1% of the corresponding non-ionic surfactant by weight of the solution is prepared in distilled water. The solution is stirred gently before analysis to ensure that the process occurs in chemical equilibrium. The cloud point temperature is taken in a thermostatic bath by immersing the surfactant solution in a 75 mm sealed glass test tube. To ensure the absence of leakage, the test tube is weighed before and after the cloud point temperature measurement. The temperature is gradually increased at a rate of less than 1°C per minute, until the temperature reaches a few degrees below the pre-estimated cloud point. The cloud point temperature is determined visually at the first sign of turbidity.

Suitable nonionic surfactants include: i) ethoxylated non-ionic surfactants prepared by the reaction of a monohydroxy alkanol or alkyphenol with 6 to 20 carbon atoms with preferably at least 3 moles particularly preferred at least 5 moles, and still more preferred at least 7 moles of ethylene oxide per mole of alcohol or alkylphenol; ii) alcohol alkoxylated surfactants having from 6 to 20 carbon atoms and at least one ethoxy and propoxy group. Preferred for use herein are mixtures of surfactants i) and ii).

Other suitable non-ionic surfactants are epoxy-capped poly(oxyalkylated) alcohols represented by the formula:

$$R1O[CH2CH(CH3)O]x[CH2CH2O]y[CH2CH(OH)R2] \qquad (I)$$

wherein R1 is a linear or branched, aliphatic hydrocarbon radical having from 4 to 18 carbon atoms; R2 is a linear or branched aliphatic hydrocarbon radical having from 2 to 26 carbon atoms; x is an integer having an average value of from 0.5 to 1.5, more preferably about 1; and y is an integer having a value of at least 15, more preferably at least 20.

Preferably, the surfactant of formula I, at least about 10 carbon atoms in the terminal epoxide unit [CH2CH(OH)R2]. Suitable surfactants of formula I, according to the present invention, are Olin Corporation's POLY-TERGENT® SLF-18B nonionic surfactants, as described, for example, in WO 94/22800, published October 13, 1994 by Olin Corporation.

Amine oxides surfactants are useful for use in the cleaning composition of the invention. Preferred are C10-C18 alkyl dimethylamine oxide, and C10-18 acylamido alkyl dimethylamine oxide.

Preferably, the cleaning composition comprises from about 0.1 to about 30% by weight of the composition, more preferably from about 0.5 to about 20% by weight of the composition of non-ionic surfactants.

Crystal growth inhibitor

Crystal growth inhibitors are materials that can bind to calcium carbonate crystals and prevent further growth of species such as aragonite and calcite.

Especially preferred crystal growth inhibitor for use herein is a sodium salt of HEDP (1-hydroxyethylidene 1,1-diphosphonic acid). Preferably, the cleaning composition comprises from 0.01 to 10%, more preferably from 0.1 to 8% and especially from 0.5 to 6% of a crystal growth inhibitor by weight of the composition, preferably a sodium salt of HEDP.

Metal Care Agents

Metal care agents may prevent or reduce the tarnishing, corrosion or oxidation of metals, including aluminium, stainless steel and non-ferrous metals, such as silver and copper. Preferably the cleaning composition comprises from 0.1 to 5%, more preferably from 0.2 to 4% and specially from 0.3 to 3% by weight of the composition of a metal care agent, preferably the metal care agent is benzo triazole (BTA).

Glass Care Agents

Glass care agents protect the appearance of glass items during the dishwashing process. Preferably the cleaning composition comprises from 0.1 to 5%, more preferably from 0.2 to 4% and especially from 0.3 to 3% by weight of the composition of a glass care agent, preferably the glass care agent is a zinc salt.

Bleach

In some embodiments the composition may comprises from about 8 to about 30%, more preferably from about 9 to about 25%, even more preferably from about 9 to about 20% of bleach by weight of the composition.

Inorganic and organic bleaches are suitable for use herein. Inorganic bleaches include perhydrate salts such as perborate, percarbonate, persulfate and persilicate salts. The inorganic perhydrate salts are normally the alkali metal salts. The inorganic perhydrate salt may be included as the crystalline solid without additional protection. Alternatively, the salt can be coated. Suitable coatings include sodium sulphate, sodium carbonate, sodium silicate and mixtures thereof. Said coatings can be applied as a mixture applied to the surface or sequentially in layers.

Alkali metal percarbonates, particularly sodium percarbonate is the preferred bleach for use herein. The percarbonate is most preferably incorporated into the products in a coated form which provides in-product stability.

Potassium peroxymonopersulfate is another inorganic perhydrate salt of utility herein.

Typical organic bleaches are organic peroxyacids, especially dodecanediperoxoic acid, tetradecanediperoxoic acid, and hexadecanediperoxoic acid. Mono- and diperazelaic acid, mono- and diperbrassylic acid are also suitable herein. Diacyl and Tetraacylperoxides, for instance dibenzoyl peroxide and dilauroyl peroxide, are other organic peroxides that can be used in the context of this invention.

Further typical organic bleaches include the peroxyacids, particular examples being the alkylperoxy acids and the arylperoxy acids. Preferred representatives are (a) peroxybenzoic acid and its ring-substituted derivatives, such as alkylperoxybenzoic acids, but also peroxy-$\alpha$-naphthoic acid and magnesium monoperphthalate, (b) the aliphatic or substituted aliphatic peroxy acids, such as peroxylauric acid, peroxystearic acid, $\varepsilon$-phthalimidoperoxycaproic acid[phthaloiminoperoxyhexanoic acid (PAP)], o-carboxybenzamidoperoxycaproic acid, N-nonenylamidoperadipic acid and N-nonenylamidopersuccinates, and (c) aliphatic and araliphatic peroxydicarboxylic acids, such as 1,12-diperoxycarboxylic acid, 1,9-diperoxyazelaic acid, diperoxysebacic acid, diperoxybrassylic acid, the diperoxyphthalic acids, 2-decyldiperoxybutane-1,4-dioic acid, N,N-terephthaloyldi(6-aminopercaproic acid).

Bleach Activators

Bleach activators are typically organic peracid precursors that enhance the bleaching action in the course of cleaning at temperatures of 60° C and below. Bleach activators suitable for some embodiments include compounds which, under perhydrolysis conditions, give aliphatic peroxoycarboxylic acids having preferably from 1 to 12 carbon atoms, in particular from 2 to 10 carbon atoms, and/or optionally substituted perbenzoic acid. Suitable substances bear O-acyl and/or N-acyl groups of the number of carbon atoms specified and/or optionally substituted benzoyl groups. Preference is given to polyacylated alkylenediamines, in particular tetraacetylethylenediamine (TAED), acylated triazine derivatives, in particular 1,5-diacetyl-2,4-dioxohexahydro-1,3,5-triazine (DADHT), acylated glycolurils, in particular tetraacetylglycoluril (TAGU), N-acylimides, in particular N-nonanoylsuccinimide (NOSI), acylated phenolsulfonates, in particular n-nonanoyl- or isononanoyloxybenzenesulfonate (n- or iso-NOBS), decanoyloxybenzoic acid (DOBA), carboxylic anhydrides, in particular phthalic anhydride, acylated polyhydric alcohols, in particular triacetin, ethylene glycol diacetate and 2,5-diacetoxy-2,5-dihydrofuran and also triethylacetyl citrate (TEAC). If present the second composition comprises from 0.01 to 5, preferably from 0.2 to 2% by weight of the composition of bleach activator, preferably TAED.

Bleach Catalyst

The cleaning composition may comprise a bleach catalyst, preferably a metal containing bleach catalyst. More preferably the metal containing bleach catalyst is a transition metal containing bleach catalyst, especially a manganese or cobalt-containing bleach catalyst.

Bleach catalysts preferred for use herein include manganese triazacyclononane and related complexes; Co, Cu, Mn and Fe bispyridylamine and related complexes; and pentamine acetate cobalt (III) and related complexes.

The cleaning composition may comprise from 0.001 to 0.5, more preferably from 0.002 to 0.05% of bleach catalyst by weight of the composition. Preferably the bleach catalyst is a manganese bleach catalyst.

Preferably, the cleaning composition of the invention comprises:

i) from 5 to 50% by weight of the composition of a builder;
ii) from 0.5 to 20% by weight of the composition of non-ionic surfactant;
iii) from 5 to 50% by weight of the composition of a complexing agent, preferably the complexing agent comprises a salt of MGDA;
iv) enzymes, preferably an amylase and a protease;
v) optionally from 0.5 to 10% by weight of the composition of a dispersant polymer, preferably a carboxylate/sulfonate polymer;
vi) optionally from 5 to 20% by weight of the composition of bleach and more preferably a bleach catalyst;

Rinse composition

The rinse composition is delivered to the water of the rinse cycle to form the rinse liquor. The rinse composition includes the amphiphilic graft polymer and a non-ionic surfactant. The rinse liquor can have a pH of 9 or above, preferably above 10, or a pH below 9, preferably below 8.

The rinse composition may comprise any of the ingredients listed in the description of the cleaning composition, at same levels, unless specified otherwise.

In case the rinse composition is alkaline, the rinse composition can comprise an alkalinity source. Alkalinity sources include carbonate, silicates and alkali metal hydroxides. Preferably the alkalinity source comprises an alkali metal hydroxide, more preferably sodium hydroxide. Other alkalinity sources may have a negative impact on shine of the dishware, specially shine of glass.

In some embodiments, the rinse compositions can include a hydroxycarboxylic acid, a complexing agent, preferably a salt of MGDA, a crystal growth inhibitor, preferably a sodium salt of HEDP, an acrylate/sulfonate copolymer, a metal care agent, a glass care agent, a preservative, and water.

Amphiphilic graft polymer

The amphiphilic graft polymer is based on water-soluble polyalkylene oxides as a graft base and side chains formed by polymerization of a vinyl ester component. The amphiphilic graft polymer is water-soluble or water-dispersible and has a weight average molar mass (Mw) of from about 3,000 to about 100,000, preferably from about 6,000 to about 45,000, and most preferably from about 8,000 to about 30,000. The weight average molar mass Mw is defined by the following expression

$$\bar{M}_w = \frac{\sum_i N_i M_i^2}{\sum_i N_i M_i}$$

Where Ni is the number of polymer molecules with molecular weight Mi.

Preferably, the amphiphilic graft polymer is soluble in water or in water/alcohol mixtures (for example a 25% by weight solution of diethylene glycol monobutyl ether in water). Preferably, the amphiphilic graft polymer herein has a low cloud point which, for the amphiphilic graft polymer soluble in water at up to 50°C, is less than or equal to about 95°C, or less than or equal to about 85°C, or less than or equal to about 75°C, and, in 25% by weight diethylene glycol monobutyl ether, less than or equal to about 90°C, preferably from about 45 to about 85°C.

In a preferred embodiment, the amphiphilic graft polymer has low degree of branching (degree of grafting). Preferably, the amphiphilic graft polymer herein has, on average, based on the reaction mixture obtained, not more than about 1 graft site, preferably not more than about 0.6 graft site, more preferably not more than about 0.5 graft site and most preferably not more than about 0.4 graft site per about 50 alkylene oxide units. The amphiphilic graft polymer herein preferably comprises, on average, based on the reaction mixture obtained, preferably at least about 0.05, in particular at least about 0.1 graft site per about 50 alkylene oxide units. The degree of branching can be determined, for example, by means of 13C NMR spectroscopy from the integrals of the signals of the graft sites and the -CH2-groups of the polyalkylene oxide.

Preferably, in accordance with the low degree of branching, the molar ratio of grafted to ungrafted alkylene oxide units in the amphiphilic graft polymers is from about 0.002 to about 0.05, preferably from about 0.002 to about 0.035, more preferably from about 0.003 to about 0.025, and even more preferably from about 0.004 to about 0.02.

In some embodiments, the amphiphilic graft polymer features a narrow molar mass distribution and hence a polydispersity Mw/Mn of generally less than or equal to about 3, or less than or equal to about 2.5, or less than or equal to about 2.3. In some embodiments, its polydispersity Mw/Mn is in the range from about 1.5 to about 2.2. The polydispersity of the amphiphilic graft polymer can be determined, for example, by gel permeation chromatography using narrow-distribution polymethyl methacrylates as the standard. In the above expression for polydispersity and throughout the rest of this description, Mw is the weight average molar mass as previously defined, and Mn is the number average molar mass defined by the following expression

$$\bar{M}_n = \frac{\sum_i N_i M_i}{\sum_i N_i}$$

where Ni is the number of polymer molecules with molecular weight Mi.

Other embodiments of the amphiphilic graft polymer may also have only a low content of ungrafted polyvinyl ester. In general, the amphiphilic graft polymer comprises less than or equal to about 10%, preferably less than or equal to about 7.5%, and more preferably less than or equal to about 5% by weight of ungrafted polyvinyl ester.

Some embodiments of the amphiphilic graft polymer have:

(A) from about 20% to about 70% by weight of a water-soluble polyalkylene oxide as a graft base and
(B) side chains formed by free-radical polymerization of from about 30% to about 80% by weight of a vinyl ester component composed of:
(B1) from about 70% to 100% by weight of vinyl acetate and/or vinyl propionate and
(B2) from 0% to about 30% by weight of a further ethylenically unsaturated monomer in the presence of (A).

Preferred embodiments of the amphiphilic graft polymer have:

(A) from about 30% to about 60% by weight of a water-soluble polyethylene oxide as a graft base and
(B) side chains formed by free-radical polymerization of from about 40% to about 70% by weight of a vinyl ester compound composed of
(B1) from about 70% to about 100% by weight of vinyl acetate and/or vinyl propionate and
(B2) from about 0% to about 30% by weight of a further ethylenically unsaturated monomer in the presence of (A).

Other embodiments comprise from about 25% to about 60% by weight of the graft base (A) and from about 40% to about 75% by weight of the polyvinyl ester component (B).

Water-soluble polyalkylene oxides suitable for forming the graft base (A) are in principle all polymers based on C2-C4-alkylene oxides which comprise at least about 50%, or at least about 60%, or at least about 75% by weight of ethylene oxide in copolymerized form. The polyalkylene oxides (A) may be the corresponding polyalkylene glycols in free form, i.e. with OH end groups, but they may also be capped at one or both end groups. Suitable end groups are, for example, C1-C25-alkyl, phenyl, and C1-C14-alkylphenyl groups.

Non-limiting examples of particularly suitable polyalkylene oxides (A) include:

(A1) polyethylene glycols which may be capped at one or both end groups, especially by C1-C25-alkyl groups, but are preferably not etherified, and have number average molar mass Mn of preferably from about 1500 to about 20,000, more preferably from about 2500 to about 15,000;
(A2) copolymers of ethylene oxide and propylene oxide and/or butylene oxide with an ethylene oxide content of at least about 50% by weight, which may likewise be capped at one or both end groups, for example by C1-C25-alkyl groups, but are preferably not etherified, and have number average molar masses Mn of preferably from about 1500 to about 20,000, more preferably from about 2500 to about 15,000;
(A3) chain-extended products having mean molar masses of from about 2500 to about 20,000, which are obtainable by reacting polyethylene glycols (A1) having number average molar masses Mn of from about 200 to about 5000 or copolymers (A2) having number average molar masses Mn of from about 200 to about 5000 with C2-C12-dicarboxylic acids or -dicarboxylic esters or C6-C18-diisocyanates.

In some embodiments, the graft bases (A) are polyethylene glycols (A1). The side chains of the inventive graft polymers are formed by polymerization of a vinyl ester component (B) in the presence of the graft base (A).

The vinyl ester component (B) may comprise of (B1) vinyl acetate, or vinyl propionate, or mixtures thereof. In some embodiments some preference may be given to vinyl acetate as the vinyl ester component (B). However, the side chains of the graft polymer can also be formed by copolymerizing vinyl acetate and/or vinyl propionate (B1) and a further ethylenically unsaturated monomer (B2). The fraction of monomer (B2) in the vinyl ester component (B) may be up to about 30% by weight, which corresponds to a content in the graft polymer of (B2) of about 24% by weight.

Suitable comonomers (B2) are, for example, monoethylenically unsaturated carboxylic acids and dicarboxylic acids and their derivatives, such as esters, amides and anhydrides, and styrene. It is also possible to use mixtures of different comonomers. Specific, non-limiting examples include (meth)acrylic acid, C1-C12-alkyl and hydroxy-C2-C12-alkyl esters of (meth)acrylic acid, (meth)acrylamide, N-C1-C12-alkyl(meth)acrylamide, N,N di(C1-C6-alkyl)(meth)acrylamide, maleic acid, maleic anhydride and mono(C1-C12-alkyl)esters of maleic acid. Some monomers (B2) are the C1-C8-alkyl esters of (meth)acrylic acid and hydroxyethyl acrylate. In some embodiments, particular preference may be given to C1-C4-alkyl esters of (meth)acrylic acid. Some embodiment may use methyl acrylate, ethyl acrylate, or n-butyl acrylate. When the amphiphilic graft polymer comprises the monomers (B2) as a constituent of the vinyl ester component (B), the content of graft polymers in (B2) may be from about 0.5% to about 20% by weight, or from about 1% to about 15% by weight, or from about 2% to about 10% by weight.

One method of preparing the amphiphilic graft polymer comprises the steps of: polymerizing a vinyl ester component (B) composed of vinyl acetate and/or vinyl propionate (B1) and, if desired, a further ethylenically unsaturated monomer (B2), in the presence of a water-soluble polyalkylene oxide (A), a free radical-forming initiator (C) and, if desired, up to about 40% by weight, based on the sum of components (A), (B) and (C), of an organic solvent (D), at a mean polymerization temperature at which the initiator (C) has a decomposition half-life of from about 40 to about 500 min, in such a way that the fraction of unconverted graft monomer (B) and initiator (C) in the reaction mixture is constantly kept in a quantitative deficiency relative to the polyalkylene oxide (A).

Suitable amphiphilic graft polymers herein are commercially available under the trade name Sokalan ® HP22 from BASF.

Without intending to be limited by theory, it is believed that the amphiphilic graft polymer helps with soil suspension, especially with the suspension of greasy soils.

Preferably, the rinse aid composition of the invention comprises from about 0.1% to about 20%, preferably from 0.2% to about 15%, more preferably from 0.3% to 10% by weight of the composition of the graft polymer.

The rinse composition is preferably free of anionic cleaning surfactants and preferably free of amphoteric surfactants. By "free of' is herein meant that the composition comprises less than 0.1%, preferably less than 0.001% by weight of the composition of the stated surfactant. The rinse composition can be acidic, i.e. it has a pH as measured at 1% by weight in distilled water at 25°C of less than 8. Alternatively, the rinse composition can be alkaline, i.e. it has a pH as measured at 1% by weight in distilled water at 25°C of equal or greater than 8.

The rinse composition may also comprise a complexing agent. Improved shine is obtained when the rinse composition comprises a complexing agent, in particular when the rinse composition comprises a salt of methyl glycine diacetic acid. Preferably, the rinse composition comprises from 5 to 50%, more preferably from 10 to 35% by weight of the composition of a complexing agent. The rinse composition preferably comprises a crystal growth inhibitor, especially a sodium salt of HEDP. Preferably, the rinse composition comprises from 0.1 to 30%, more preferably from 0.5 to 25% and especially from 1 to 20% of a crystal growth inhibitor by weight of the composition, preferably a sodium salt of HEDP. The rinse composition preferably comprises from 5 to 50%, more preferably from 10 to 40% by weight of the composition of a non-ionic surfactant. The rinse composition is preferably free of anionic cleaning surfactants. By "anionic cleaning surfactant" is herein meant an anionic surfactant having a chain length of more than 10 carbon atoms. Examples of anionic cleaning surfactants include long chain length (i.e., more than 10 carbon atoms) alkyl sulfates, alkyl/aryl sulfonates and alkyl ethoxysulfates.

The rinse aid composition can also include a hydroxycarboxylic acid or salt thereof. Suitable hydroxycarboxylic acids and their salts for use in the rinse aid compositions include citric, lactic, gluconic and acetic acids and combinations and/or alkali metal salts thereof. The hydroxycarboxylic acids or alkali metal salts thereof may be added to or be present in the composition in either the anhydrous or hydrated form or combinations thereof. When a hydroxycarboxylic acid is included in the rinse aid compositions, it can be present from about 0.1 to about 20 wt. %; preferably from about 0.25 to about 18 wt. %; more preferably from about 0.5 to about 15 wt. %; and even more preferably from about 1 to about 12 wt. %.

Hydrotropes

The rinse composition of the present invention can include a hydrotrope. A hydrotrope creates increased water solubility of hydrophobic materials and ensures physical stability of the composition. In some embodiments, hydrotropes are low molecular weight aromatic sulfonate materials such as cumene sulfonate, xylene sulfonate and dialkyldiphenyl oxide sulfonate materials. In other embodiments, hydrotropes are short chainlength alkyl sulfates with less than 10 carbon atoms in the alkyl chain.

A hydrotrope or combination of hydrotropes can be present in the compositions at an amount of from about 1% to about 50% by weight of the composition. In other embodiments, a hydrotrope or combination of hydrotropes can be present at about 10% to about 30% by weight of the composition.

Carriers

The rinse composition of the present invention can be formulated as liquid compositions. Carriers can be included in such liquid formulations. Any carrier suitable for use in a rinse aid composition can be used in the present invention. For example, in some embodiments the compositions include water as a carrier.

In some embodiments, liquid rinse aid compositions according to the present invention will contain no more than about 98 % by weight of the composition of water and typically no more than about 90% by weight of the composition of water. In other embodiments, liquid rinse aid compositions will contain at least 50% by weight of the composition of water, or at least 60% by weight of the composition of water as a carrier.

The rinse composition may comprise glass care and/or metal care agents.

A preferred rinse composition according to the method of the invention comprises:

    i) from 0.1 to 20% by weight of the composition of the amphiphilic graft polymer;
    ii) from 10 to 40% by weight of the composition of non-ionic surfactant;

iii) from 1 to 20% by weight of the composition of citric acid and/or a salt of citric acid;

iv) from 0 to 20% by weight of the composition of HEDP;

v) optionally a glass care and/or a metal care agent; and

vi) water.

Another preferred rinse composition according to the method of the invention comprises:

i) from 0.1 to 20% by weight of the composition of the amphiphilic graft polymer;

ii) from 10 to 40% by weight of the composition of non-ionic surfactant;

iii) from 0 to 40% by weight of the composition of an alkalinity source;

iv) from 10 to 35% by weight of the composition of a complexing agent, preferably the complexing agent comprises a salt of MGDA;

v) from 0 to 20% by weight of the composition of a sodium salt of HEDP;

vi) optionally a glass care and/or a metal care agent; and

vii) water;

Pack to house the cleaning and the rinse composition

The cleaning and the rinse composition may be housed in a pack comprising at least two separate compartments. The pack can have more than two compartments. The pack can be inserted into the dishwasher as such or its content can be used to fill existing storing reservoirs in the dishwasher.

The pack or reservoir containing the compositions of the method of the invention can be located inside or outside of the dishwasher. If placed inside of the dishwasher, the pack or storage reservoir can be integrated into the automatic dishwasher (i.e., a storage reservoir permanently fixed (built in) to the automatic dishwasher), and can also be autarkic (i.e., an independent storage reservoir that can be inserted into the interior of the automatic dishwasher).

An example of an integrated storage reservoir is a receptacle built into the door of the automatic dishwasher and connected to the interior of the dishwasher by a supply line.

The pack can be used as a removable dosing device. The dosing device can be for example an automated unit comprising the pack and a dispensing unit capable of releasing a controlled amount of different compositions at different times, for example to the main wash and to the rinse. Different types of hardware might be part of the dosing device for controlling the dispensing of the cleaning and rinsing compositions, or for communicating with external devices such as data processing units, the dishwasher or a mobile device or server that a user can operate.

The pack has very good thermal stability, especially if it is to be located in the interior of the dishwasher.

Preferably, from 1 to 25, more preferably from 2 to 20 grams of the cleaning composition is delivered first, followed by from 1 to 15, more preferably from 2 to 8 grams of the rinse composition thereafter.

Preferred processes according to the invention are those wherein the compositions, prior to being metered into the interior of the dishwasher, remains in the storage reservoir that is located outside (as for example WO2019/81910A1) or inside of the dishwasher for at least two, preferably at least four, particularly preferably at least eight and in particular at least twelve separate dishwashing programs.

The dosing system can be linked to sensors that can determine, based on sensor's input, the amount of composition required. Sensors that may be used include pH, turbidity, temperature, humidity, conductivity, etc. The dishwasher may require data processing power to achieve this. It is preferred that the dishwashing will have connectivity to other devices. This may take the form of wi-fi, mobile data, blue tooth, etc. This may allow the dishwasher to be monitored and/or controlled remotely. Preferably, this also allows the machine to connect with the internet.

The volume of preferred storage reservoirs containing one or more chambers is from 10 to 1000 ml, preferably from 20 to 800 ml, and especially from 50 to 500 ml.

Example 1

I. Preparation of Test Compositions

Tests were carried out using Fairy Platinum automatic dishwashing detergent (Procter & Gamble) and the following rinse aid compositions:

| Automatic Dishwashing Rinse Composition | 1 | 2 | 3 | 4 | 5 | 6 |
|---|---|---|---|---|---|---|
| **Ingredient** | **Level (grams active per dose)** | | | | | |
| Sodium citrate | 0.08 | 0.08 | | | | |

(continued)

| Automatic Dishwashing Rinse Composition | 1 | 2 | 3 | 4 | 5 | 6 |
|---|---|---|---|---|---|---|
| **Ingredient** | **Level (grams active per dose)** | | | | | |
| Tri-sodium salt of methyl glycine diacetic acid | | | 5.5 | 5.5 | | |
| HEDP (tetra sodium 1-hydroxyethyidene-1,1-diphosphonate) | | | 0.12 | 0.12 | | |
| Plurafac® SLF180 (non-ionic surfactant supplied by BASF) | 0.5 | 0.5 | 0.5 | 0.5 | | |
| Marlipal® O13/70 (non-ionic surfactant supplied by Sasol) | 0.5 | 0.5 | 0.5 | 0.5 | | |
| Polymer[1] | | 0.5 | | 0.5 | | 0.5 |
| Fairy Rinse Aid | | | | | 5 | 5 |
| Sodium diethylene triamine penta(methylphosphonic acid) | | | | | | 1 |
| **TOTAL g active** | **1.08** | **1.58** | **6.62** | **7.12** | **5** | **6.5** |
| PolyVinylAcetate (PVAc) grafted PolyEthyleneOxide (PEO) with 40% PEO, 60% PVAc and Mw 27100 | | | | | | |

II. Test Items

| Test Item | Supplier | Description | Number of Replicates added and position in machine |
|---|---|---|---|
| Dallas Glass | Muller NV | Article number 802002 | 2<br>top rack, opposite corners |
| Polypropylene polystyrene rectangular container | Colruyt | Amuse basic meat box | 1<br>top rack |
| Polypropylene round container | Carrefour | Coolness box 0.5L | 1<br>top rack |
| Polypropylene standard container | Variapack | Prestipack Combi BCS900 | 2<br>1x top rack, 1x bottom rack |
| Plastic SAN tumbler | US Acrylic | Article number 9273 | 2<br>top rack, opposite corners |
| Black ceramic plate | La table d'arc | Article number 0883314080193 | 2<br>bottom rack, back |
| Knife | Alto Autlet NV | Couteau table ingres ET 1700-5 | 2<br>cutlery tray |

III. Additional Ballast Soil I

To add extra soil stress to the test, a blend of soils is added to the dishwasher, as prepared by the procedure described below:

| Ingredient | % content |
|---|---|
| Vegetable oil | 31.6 |
| Margarine | 6.3 |
| Lard | 6.3 |
| Deep-frying fat | 6.3 |
| Whole egg | 15.8 |

(continued)

| Ingredient | % content |
|---|---|
| Cream | 9.4 |
| Whole Milk | 6.3 |
| Potato Starch | 2.2 |
| Gravy | 1.7 |
| Wheat Flour | 0.6 |
| Quark Powder | 0.6 |
| Benzoic Acid >99% | 0.3 |
| Tomato Ketchup | 6.3 |
| Mustard | 6.3 |
| Total | 100 |

Soil Preparation

1. Combine the vegetable oil and whole egg and mix thoroughly (approximately 30 minutes).
2. Add ketchup and mustard, still stirring vigorously.
3. Melt the fats, allow to cool to approximately 40°C, then add to the mixture and blend well.
4. Stir in the cream and milk.
5. Add the powdered solid constituents and mix everything to a smooth paste.
6. Put 50g of the soil mix into plastic pots and freeze.

IV. Additional Ballast Soil II

To add extra soil stress to the test, a blend of soils is added to the dishwasher, as prepared by the procedure described below:

| Ingredient | % content |
|---|---|
| Carrefour Matière grass végétale (Cuir et Rotir) | 49.95 |
| Carrefour Graisse à frire | 49.95 |
| Solvent Red 26 dye | 0.1 |

Soil Preparation

1. Mix the Carrefour Matière grass végétale (Cuir et Rotir) and Carrefour Graisse à frire in a Thermomixer for 30 minutes at speed 2, 55°C to melt the grease while mixing.

2. After 30 minutes add the Solvent Red 26 dye to the mixture and continue the mixing for another 15 minutes on the same settings.

3. Put 10g of the soil mixture into plastic pots and refrigerate.

V. Test wash procedure

| Automatic Dishwasher: | Miele, model GSL2 |
|---|---|
| Wash volume: | 5000 ml |
| Main Wash Water temperature: | 45°C |
| Length of the Main Wash | 22 minutes (8 minutes holding) |
| Rinse Water temperature: | 55°C |
| Water hardness: | 21 gpg |
| Main Wash Composition addition: | Added into the bottom of the automatic dishwasher when the detergent dispenser opens at the start of the main wash. |
| Rinse Composition addition: | Added into the bottom of the automatic dishwasher at the start of second (heated) rinse. |
| Additional soil stress: | 1x 50g pot of additional ballast soil I and 1x 10g pot of additional ballast soil II added to bottom rack. |

Example 1

One dose of Fairy Platinum detergent and one dose of the rinse composition was added to the automatic dishwasher as shown below.

| Example | Main wash composition | Rinse composition |
|---|---|---|
| Formula A (comparative) | Fairy Platinum automatic dishwasher Tablet | 1.08g Composition 1 |
| Formula B | | 1.58g Composition 2 |
| Formula C (comparative) | | 6.62g Composition 3 |
| Formula D | | 7.12g Composition 4 |
| Formula E (comparative) | | 5.0g Composition 5 |
| Formula F | | 6.5g Composition 6 |

A dishwasher was loaded with the items as detailed above which were washed using Formulas A, B, C, D, E and F respectively. After running 5 consecutive cycles, the plastic tumblers were then photographed against a black background and the images were analysed using computer aided software. The image produced is analysed versus the greyscale and assigned a number to indicate the average transmission of light through the same. Grit is defined as a circular cluster smaller than 4 pixels with higher gray scale (4 units) versus the background.

| Example | Grit Count |
|---|---|
| Formula A | 1289 |
| Formula B (according to the invention) | 185 |
| Formula C | 1677 |
| Formula D (according to the invention) | 164 |
| Formula E | 1248 |
| Formula F (according to the invention) | 220 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1.  A method of cleaning dishware in a domestic dishwasher using a program comprising a cleaning cycle and a rinse cycle, the method comprising the steps of:

    a) placing the dishware in the dishwasher;
    b) delivering a cleaning composition into the cleaning cycle to form a wash liquor and subjecting the dishware to the wash liquor; and
    c) delivering a rinse composition to form a rinse liquor, the composition comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000 and subjecting the dishware to the rinse liquor.

2.  A method according to claim 1, wherein said amphiphilic graft polymer has an average of less than or equal to about one graft site per about 50 alkylene oxide units.

3.  A method according to any of claim 1 or 2, wherein said amphiphilic graft polymer has a polydispersity of less than or equal to about 3.

4.  A method according to any preceding claim, wherein said amphiphilic graft polymer comprises less than or equal to about 10% by weight of the polyvinyl ester in ungrafted form.

5.  A method according to any preceding claim, wherein said amphiphilic graft polymer has

    (A) from about 20% to about 70% by weight of a water-soluble polyalkylene oxide as a graft base and
    (B) side chains formed by free-radical polymerization of from about 30% to about 80% by weight of a vinyl ester compound composed of
    (B1) from about 70% to about 100% by weight of vinyl acetate and/or vinyl propionate and
    (B2) from about 0% to about 30% by weight of a further ethylenically unsaturated monomer
    in the presence of (A).

6.  A method according to any preceding claim, wherein said amphiphilic graft polymer has

    (A) from about 30% to about 60% by weight of a water-soluble polyethylene oxide as a graft base and
    (B) side chains formed by free-radical polymerization of from about 40% to about 70% by weight of a vinyl ester compound composed of
    (B1) from about 70% to about 100% by weight of vinyl acetate and/or vinyl propionate and
    (B2) from about 0% to about 30% by weight of a further ethylenically unsaturated monomer
    in the presence of (A).

7.  A method according to any preceding claim, wherein said rinse composition comprises from about 0.1% to about 20% by weight of the rinse composition of said amphiphilic graft polymer.

8.  A method according to any preceding claim, wherein the rinse composition further comprises from about 1% to about 40% by weight of the rinse composition of non-ionic surfactant.

9.  A method according to any preceding claim, wherein the rinse composition comprises a hydrocarboxylic acid.

10. A method according to any preceding claim, wherein the rinse composition comprises a complexing agent, preferably a salt of methyl glycine diacetic acid.

11. A method according to any preceding claim, wherein the compositions are delivered from a multi-dosing system.

12. An alkaline rinse composition for use in the method of any preceding claims, comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000 and wherein the composition is free of anionic cleaning surfactant with an alkyl chain length of more than 10 carbon atoms.

13. A composition according to the preceding claim wherein the composition has a pH of 8 or greater as measured at 1% by weight in distilled water at 25°C.

14. A composition according to claim 12 wherein the composition has a pH of less than 8 as measured at 1% by weight in distilled water at 25°C.

15. An automatic dishwashing pack suitable for use in the method according to any of the preceding claims, the pack comprising at least two different compartments, a first compartment comprising the cleaning composition and a second compartment comprising the rinse composition.

16. Use of a rinse aid composition comprising an amphiphilic graft polymer based on water-soluble polyalkylene oxides as a graft base and side chains formed by polymerization of a vinyl ester component, wherein said amphiphilic graft polymer is water-soluble or water-dispersible and has a weight average molar mass (Mw) of from about 3,000 to about 100,000 to provide grit prevention in automatic dishwashing.

Europäisches
Patentamt

European
Patent Office

Office européen
des brevets

**EUROPEAN SEARCH REPORT**

Application Number

EP 20 20 8157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 778 339 A2 (BASF CORP [US]) 11 June 1997 (1997-06-11) | 12-14 | INV. C11D3/37 C11D17/04 C11D11/00 |
| Y | * example 3 * * table 1 * * column 13, line 5 - line 25 * | 1-11,15 | |
| X | WO 2013/086251 A1 (PROCTER & GAMBLE [US]) 13 June 2013 (2013-06-13) | 12,13 | |
| Y | * example 14 * * page 32, line 8 - line 9 * * table on page 34 * * claims 4, 7-9 * | 1-11,15 | |
| X | WO 2019/197315 A1 (BASF SE [DE]) 17 October 2019 (2019-10-17) | 12,13,16 | |
| Y | * tables 1-3 * * page 23, line 1 - line 10 * * page 31, line 9 - line 27 * | 1-11,15 | |
| Y | WO 2011/066136 A1 (PROCTER & GAMBLE [US]; SONG XINBEI [US]) 3 June 2011 (2011-06-03) * claim 1 * * example 3 * | 1-11,15 | TECHNICAL FIELDS SEARCHED (IPC) C11D |
| A | EP 2 029 645 A1 (BASF SE [DE]) 4 March 2009 (2009-03-04) * the whole document * | 1-16 | |

The present search report has been drawn up for all claims

| Place of search | Date of completion of the search | Examiner |
|---|---|---|
| The Hague | 20 April 2021 | Placke, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 20 8157

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | | Publication date | Patent family member(s) | | Publication date |
|---|---|---|---|---|---|
| EP 0778339 | A2 | 11-06-1997 | EP | 0778339 A2 | 11-06-1997 |
| | | | US | 5750483 A | 12-05-1998 |
| WO 2013086251 | A1 | 13-06-2013 | EP | 2788467 A1 | 15-10-2014 |
| | | | ES | 2666544 T3 | 07-05-2018 |
| | | | US | 2013150276 A1 | 13-06-2013 |
| | | | WO | 2013086251 A1 | 13-06-2013 |
| WO 2019197315 | A1 | 17-10-2019 | NONE | | |
| WO 2011066136 | A1 | 03-06-2011 | EP | 2507355 A1 | 10-10-2012 |
| | | | JP | 2013512041 A | 11-04-2013 |
| | | | US | 2011126858 A1 | 02-06-2011 |
| | | | WO | 2011066136 A1 | 03-06-2011 |
| EP 2029645 | A1 | 04-03-2009 | AT | 474868 T | 15-08-2010 |
| | | | AT | 474906 T | 15-08-2010 |
| | | | BR | PI0711719 A2 | 29-11-2011 |
| | | | BR | PI0712159 A2 | 17-01-2012 |
| | | | CA | 2650067 A1 | 06-12-2007 |
| | | | CA | 2653880 A1 | 06-12-2007 |
| | | | CN | 101454364 A | 10-06-2009 |
| | | | CN | 101473025 A | 01-07-2009 |
| | | | EG | 25183 A | 11-10-2011 |
| | | | EP | 2024479 A1 | 18-02-2009 |
| | | | EP | 2029645 A1 | 04-03-2009 |
| | | | ES | 2349236 T3 | 29-12-2010 |
| | | | ES | 2349321 T3 | 29-12-2010 |
| | | | JP | 5542434 B2 | 09-07-2014 |
| | | | JP | 2009538946 A | 12-11-2009 |
| | | | JP | 2009538947 A | 12-11-2009 |
| | | | KR | 20090023374 A | 04-03-2009 |
| | | | RU | 2008142866 A | 10-07-2010 |
| | | | US | 2009176935 A1 | 09-07-2009 |
| | | | US | 2009298735 A1 | 03-12-2009 |
| | | | WO | 2007138053 A1 | 06-12-2007 |
| | | | WO | 2007138054 A1 | 06-12-2007 |
| | | | ZA | 200808921 B | 25-11-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004067737 A
- WO 2015091989 A
- WO 2015091990 A
- WO 2015024739 A
- WO 2015143360 A
- US 6312936 B
- US 5679630 A
- US 4760025 A
- DE 102006022216 A1
- DE 102006022224 A1
- WO 2015089447 A
- WO 2015089441 A
- WO 2016066756 A
- WO 2016066757 A
- WO 2016069557 A
- WO 2016069563 A
- WO 2016069569 A
- WO 8906270 A
- WO 05052161 A
- WO 05052146 A
- WO 07044993 A2
- WO 2014194032 A
- WO 2014194054 A
- WO 2014194117 A
- WO 2015193488 A
- WO 2016075078 A
- WO 9217577 A
- WO 2016205755 A
- WO 2018118950 A
- US 10655090 B2
- WO 0037627 A
- WO 08010925 A
- WO 2019125894 A1
- WO 2019245839 A1
- US 5352604 A
- US P7153818 B
- WO 9700324 A
- EP 1022334 A
- WO 9623873 A
- WO 0060060 A
- WO 06002643 A
- WO 2017192657 A
- WO 2011100410 A
- WO 2013003659 A
- US 6093562 A
- WO 09149130 A
- WO 2016091688 A
- WO 2014099523 A
- WO 2014164777 A
- WO 2009149271 A
- WO 2016180748 A
- US 20190169546 A
- WO 9422800 A
- WO 201981910 A1